(19) Europäisches Patentamt
European Patent Office
Office européen des brevets

(11) EP 2 000 197 B1

(12) **EUROPEAN PATENT SPECIFICATION**

(45) Date of publication and mention of the grant of the patent:
**25.01.2012 Bulletin 2012/04**

(21) Application number: **07740448.1**

(22) Date of filing: **23.03.2007**

(51) Int Cl.:
***B01D 65/06*** *(2006.01)* ***B01D 61/02*** *(2006.01)*
***B01D 61/14*** *(2006.01)* ***B01D 69/02*** *(2006.01)*
***C02F 1/44*** *(2006.01)*

(86) International application number:
**PCT/JP2007/057010**

(87) International publication number:
**WO 2007/114308 (11.10.2007 Gazette 2007/41)**

(54) **REJECTION IMPROVER FOR NANOFILTRATION MEMBRANES OR REVERSE OSMOSIS MEMBRANES, METHOD FOR IMPROVING REJECTION, NANOFILTRATION MEMBRANES OR REVERSE OSMOSIS MEMBRANES, AND METHOD AND EQUIPMENT FOR WATER TREATMENT**

ABSTOSSVERBESSERER FÜR NANOFILTRIERMEMBRANEN ODER UMKEHROSMOSEMEMBRANEN, VERFAHREN ZUR ABSTOSSVERBESSERUNG, NANOFILTRIERMEMBRANEN ODER UMKEHROSMOSEMEMBRANEN SOWIE VERFAHREN UND VORRICHTUNG ZUR WASSERBEHANDLUNG

AMELIORATEUR DE REJET POUR MEMBRANES DE NANOFILTRATION OU MEMBRANES D'OSMOSE INVERSE, PROCEDE POUR AMELIORER LE REJET, MEMBRANES DE NANOFILTRATION OU MEMBRANES D'OSMOSE INVERSE ET PROCEDE ET EQUIPEMENT POUR LE TRAITEMENT DE L'EAU

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.03.2006 JP 2006091050**
**28.12.2006 JP 2006355141**

(43) Date of publication of application:
**10.12.2008 Bulletin 2008/50**

(73) Proprietor: **Kurita Water Industries Ltd.**
**Shinjuku-ku, Tokyo 160-8383 (JP)**

(72) Inventor: **KAWAKATSU, Takahiro**
**Tokyo 160-8383 (JP)**

(74) Representative: **Goddar, Heinz J.**
**Forrester & Boehmert**
**Pettenkoferstrasse 20-22**
**80336 München (DE)**

(56) References cited:
**WO-A-2005/089913 JP-A- 01 099 613**
**JP-A- 03 038 231 JP-A- 04 136 194**
**JP-A- 62 019 207 JP-A- 63 309 536**
**JP-A- 2000 107 758 JP-A- 2002 177 750**
**JP-A- 2004 230 375 JP-A- 2005 270 645**
**US-A- 3 710 945 US-A1- 2004 140 259**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 000 197 B1

## Description

### TECHNICAL FIELD

The present invention relates to an agent and a process for increasing the rejection of a nanofiltration membrane or a reverse osmosis membrane, a nanofiltration membrane or a reverse osmosis membrane, a process for water treatment and an apparatus for water treatment. More particularly, the present invention relates to an agent for increasing the rejection of a nanofiltration membrane or a reverse osmosis membrane with which the rejection and, in particular, the rejection to nonionic solutes, of a nanofiltration membrane or a reverse osmosis membrane can be increased while the flux is kept at a great value, a process for increasing the rejection of a nanofiltration membrane or a reverse osmosis membrane using the agent for increasing the rejection, a nanofiltration membrane or a reverse osmosis membrane exhibiting a rejection increased in accordance with the process, a process for water treatment using the nanofiltration membrane or the reverse osmosis membrane, and an apparatus for water treatment using the nanofiltration membrane or the reverse osmosis membrane.

### BACKGROUND ART

Introduction of processes for recovering, regenerating and reusing waste water have been promoted so that water resources are effectively utilized. To obtain treated water having excellent quality, it is essential that a nanofiltration membrane or a reverse osmosis membrane which can remove electrolytes and substances having medium and low molecular weights be used. Removal of nonionic organic low molecular weight compounds such as urea and isopropyl alcohol is difficult even when the reverse osmosis membrane is used. The rejection is about 90 to 97% for isopropyl alcohol and reaches mere several tens percent for urea even when a membrane which can achieve a rejection of 99% or greater for sodium chloride is used. Therefore, the increase in the rejection of the nanofiltration membrane and the reverse osmosis membrane has been required.

The rejection of a nanofiltration membrane and a reverse osmosis membrane is decreased due to degradation of a macromolecule used as the membrane material caused by the effects of oxidizing substances and reducing substances present in water and by other reasons, and it becomes difficult to obtain the required quality of treated water. This change may take place gradually during the use for a long period of time or may occur suddenly due to an accident. When the degradation takes place, it is required that the membrane be recovered from the degraded condition without dismounting the membrane from a module and, where possible, be recovered while the operation of treating the supplied water is continued. When the rejection of a reverse osmosis membrane decreased by oxidation or the like can be recovered, the membrane having the recovered rejection can be used in accordance with the condition obtained after the recovery.

In the treatment of supplied water, a treatment under an ultralow pressure of 0.5 MPa or lower is desired so that the energy cost can be decreased. The nanofiltration membrane is suitable for the use under an ultralow pressure. However, the rejection of the nanofiltration membrane to organic substances and electrolytes is small. Application of the nanofiltration membrane is expected to be increased in a broader range when the rejection can be adjusted in accordance with the object.

For this purpose, processes for increasing the rejection of nanofiltration membranes and reverse osmosis membranes have been developed. For example, as the process for maintaining the property of a reverse osmosis membrane for a long period of time so that the operation of an apparatus of a reverse osmosis membrane can be performed smoothly, a process for maintaining the property of a reverse osmosis membrane for a long time in which the reverse osmosis membrane is brought into contact with an agent for treating a membrane such as polyvinyl methyl ether and a polyethylene glycol alkyl ether in a great concentration and, thereafter, the membrane is continuously brought into contact with the agent for treating a membrane in a small concentration, is proposed (Patent Reference 1).

As the process for increasing the rejecting property and the durability of a semipermeable membrane used for the reverse osmosis or the like, a process for treating a semipermeable membrane in which an auxiliary polymer having a substantial amount of acetyl group is added to the semipermeable membrane just in an effective amount, is proposed (Patent Reference 2).

As for the semipermeable membrane used for the reverse osmosis, an agent containing a vinyl-based polymer having organic groups in which acetoxy group is present as the side chain and carboxyl group is present at the end is proposed as the agent for treating a semipermeable membrane which is applied not only to used semipermeable membranes but also to unused semipermeable membranes and increases the permeability of solvents and the separation of solutes (Patent Reference 3).

As the process for repairing a membrane used for separation which is made of acetyl cellulose or an acrylonitrile copolymer and used in the field of the reverse osmosis and the like, a process in which the portion of defect is coated with a liquid substance compatible with the membrane and exhibiting the plasticizing effect, is proposed (Patent Reference

4).

As the process for treating a reverse osmosis membrane which can maintain the effect of decreasing the concentration of solutes in water permeated through the reverse osmosis membrane for a long time and can separate non-electrolytic organic substances and substances which are not dissociated in the neutral condition such as boron with a great rejection, a process for treating a reverse osmosis element in which, using a membrane separation apparatus having a reverse osmosis element having a polyamide skin layer, the reverse osmosis element is packed into a pressure-resistant container in the membrane separation apparatus and, then, an aqueous solution of free chlorine containing bromine is brought into contact with the reverse osmosis element, is proposed (Patent Reference 5).

However, the above processes and agents have drawbacks in that the material of the membrane to which the process or the agent can be applied is limited, that the possible range of increase in the rejection is small, that the decrease in the flux is markedly great, and that durability of the increased rejection is insufficient.

Construction of plants using a reverse osmosis membrane for desalination of sea water is promoted due to the insufficient supply of water in the world. The sea water contains 3 to 8 mg/liter of boron, and desalted water cannot be used as the sufficiently safe drinking water unless the desalted water satisfies the guide line of WHO which requires 0.5 mgB/liter. Conventional reverse osmosis membranes cannot achieve the guide line of WHO, and treated water containing about 1 to 2 mgB/liter at best is obtained even when the plant is operated under the condition of a recovery of 50 to 70%. In the practical operation of a plant using a reverse osmosis membrane, the concentration of boron is decreased in accordance with a process such as a process in which the recovery in the treatment with a reverse osmosis membrane is decreased, a process in which water treated by the reverse osmosis membrane is diluted by mixing with surface water, a process in which the treatment with the reverse osmosis membrane is conducted in a plurality of stages, and a process in which boron is removed by a treatment with a material absorbing boron, so that water treated with the reverse osmosis membrane can be used as the drinking water. Therefore, problems arise in that the cost of the treatment increases and the process becomes complicated.

[Patent Reference 1] Japanese Patent Application Laid-Open No. Showa 53(1978)-28083
[Patent Reference 2] Japanese Patent Application Laid-Open No. Showa 50(1975)-140378
[Patent Reference 3] Japanese Patent Application Laid-Open No. Showa 55(1980)-114306
[Patent Reference 4] Japanese Patent Application Laid-Open No. Showa 56(1981)-67504
[Patent Reference 5] Japanese Patent Application Laid-Open No. 2003-88730

US 2004/140259 discloses microporous membrqanes embracing nanofiltration and reverse osmosis membranes which have been treated with PEG or PPG in aqueous solution as modifying agent. Reference is further made to WO 2005/089913 A and US-A-3 710 945.

## DISCLOSURE OF THE INVENTION

The present invention has an object of providing an agent for increasing the rejection of a nanofiltration membrane or a reverse osmosis membrane with which the rejection and, in particular, the rejection to nonionic solutes, of a nanofiltration membrane or a reverse osmosis membrane can be increased while the flux is kept at a great value, a process for increasing the rejection of a nanofiltration membrane or a reverse osmosis membrane using the agent for increasing the rejection, a nanofiltration membrane or a reverse osmosis membrane exhibiting a rejection increased in accordance with the process, a process for water treatment using the nanofiltration membrane or the reverse osmosis membrane, and an apparatus for water treatment using the nanofiltration membrane or the reverse osmosis membrane.

As the result of extensive studies by the present inventors to achieve the above object, it was found that the rejection could be increased without markedly decreasing the flux by treating a nanofiltration membrane or a reverse osmosis membrane with an aqueous solution of a compound having a polyalkylene glycol chain having a weight-average molecular weight of 2,000 to 6,000, and that the properties could be improved when the treatment was applied to an unused nanofiltration membrane or an unused reverse osmosis membrane and, moreover, the rejection could be recovered when the treatment was applied to a nanofiltration membrane or a reverse osmosis membrane exhibiting a rejection decreased due to the use. The present invention has been completed based on the knowledge.

The present invention provides an process with the features of claim 1 as well as a nanofiltration membrane or a reverse osmosis membrane with the features of claim 5. Claims 2 to 4 and claims 6-7 refer to preferred embodiments.

## THE MOST PREFERRED EMBODIMENT TO CARRY OUT THE INVENTION

The agent for increasing the rejection of a nanofiltration membrane or a reverse osmosis membrane of the present invention comprises a compound having a polyalkylene glycol chain having a weight-average molecular weight of 2,000 to 6,000. Although the polyalkylene glycol has a structure which can be considered to be formed by polycondensation of an alkylene glycol with dehydration, the polyalkylene glycol can be actually produced by the anionic polymerization of an alkylene oxide in the presence of an alkali or the cationic polymerization of an alkylene oxide initiated with proton. Examples of the polyalkylene glycol chain in the compound used in the present invention include the polyethylene glycol chain, the polypropylene glycol chain, the polytrimethylene glycol chain and the polytetramethylene glycol chain. These glycol chains can be formed by the ring-opening polymerization of a compound such as ethylene oxide, propylene oxide, oxetane and tetrahydrofuran. Examples of the compound having a polyalkylene glycol chain used in the present invention include compounds having a multi-branched structure such as multi-branched polyerythritols obtained by the ring-opening polymerization of tetrahydrofuran-3,4-diol and multi-branched polyglycerols obtained by the ring-opening polymerization of glycidol.

The polyalkylene glycol chain in the compound used in the present invention has a weight-average molecular weight of 2,000 to 6,000 and preferably 3,000 to 5,000. When the weight-average molecular weight of the polyalkylene glycol chain is smaller than 2,000, there is the possibility that the rejection of the nanofiltration membrane or the reverse osmosis membrane is not sufficiently increased, and the increased rejection is not maintained after the treatment. When the weight-average molecular weight of the polyalkylene glycol chain exceeds 6,000, there is the possibility that the flux through the nanofiltration membrane or the reverse osmosis membrane is decreased to a great degree. The weight-average molecular weight can be obtained by the analysis of an aqueous solution of the compound having a polyalkylene glycol chain in accordance with the gel permeation chromatography (GPC), followed by calculating the molecular weight expressed as the molecular weight of the corresponding polyethylene oxide used as the reference compound from the obtained chromatogram.

The nanofiltration membrane to which the agent for increasing the rejection of the present invention is applied is a membrane for separating liquids which rejects particles and macromolecules having a particle diameter of about 2 nm. Examples of the membrane structure of the nanofiltration membrane include inorganic membranes such as ceramic membranes and macromolecular membranes such as asymmetric membranes, composite membranes and charged membranes. The reverse osmosis membrane is a membrane for separating liquids which rejects solutes and allows permeation of solvents by applying a pressure exceeding the osmotic pressure between the solutions at both sides of the membrane to the side having a greater concentration. Examples of the membrane structure of the reverse osmosis membrane include macromolecular membranes such as asymmetric membranes and composite membranes. Examples of the raw material of the nanofiltration membrane or the reverse osmosis membrane to which the agent for increasing the rejection of the present invention is applied include polyamide-based raw materials such as aromatic polyamides, aliphatic polyamides and composite materials of these polyamides and cellulose-based raw materials such as cellulose acetate. The agent for increasing the rejection of the present invention is preferably applied to a membrane comprising the aromatic polyamide among these raw materials. The agent for increasing the rejection of the present invention can be applied to' any of nanofiltration membranes and reverse osmosis membranes which are unused and nanofiltration membranes and reverse osmosis membranes which have been used and exhibit decreased properties. The module of the nanofiltration membrane or the reverse osmosis membrane is not particularly limited. Examples of the module include tubular membrane modules, flat membrane modules, spiral membrane modules and hollow fiber membrane modules.

In the present invention, as the compound having a polyalkylene glycol chain, compounds having a polyalkylene glycol chain having an ionic group introduced therein can be used. Examples of the ionic group include sulfo group $-SO_3H$, carboxyl group -COOH, amino group $-NH_2$ and quaternary ammonium group $-N^+R_3X^-$. The nanofiltration membrane or the reverse osmosis membrane is frequently used for filtration under a weakly acidic condition to prevent formation of scales. In this case, the amount of anions is increased, and it is effective that sulfo group exhibiting a strong anionic property is introduced. As the process for introducing sulfo group into the polyalkylene glycol chain, for example, epoxypropanol and sodium sulfite are added to an aqueous solution of polyethylene glycol, and the reaction is allowed to proceed under the refluxing condition of 70 to 90°C to synthesize a sulfonated polyethylene glycol represented by general formula [1] or [2]:

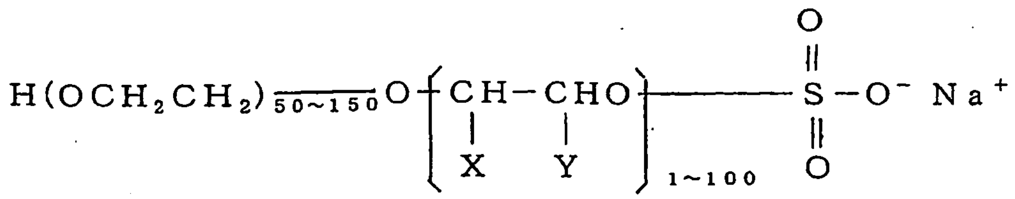

··· [1]

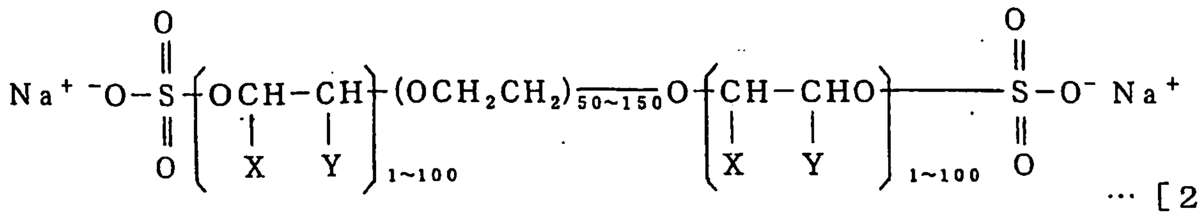

··· [2]

In the above formulae, the combination of (X, Y) represents a combination of (H, $CH_2OH$) or ($CH_2OH$, H). However, the sulfonated polyethylene glycol is not limited to the compounds represented by general formula [1] or [2], but the examples also include compounds expressed by formula [3] or [4]:

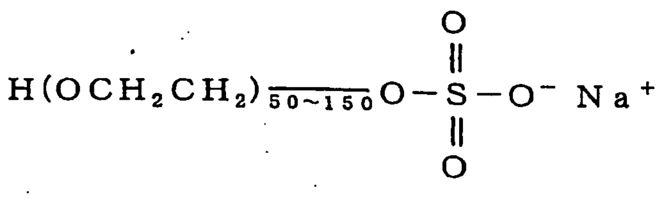

··· [3]

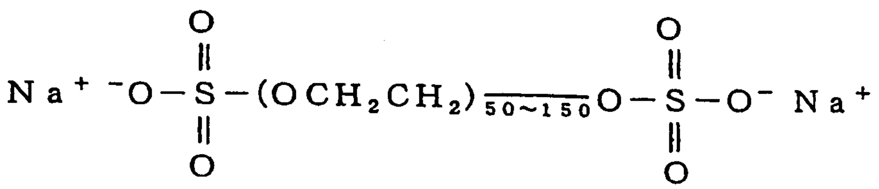

··· [4]

In the present invention, the rejection to nonionic low molecular weight compounds can be increased by treating the nanofiltration membrane or the reverse osmosis membrane with an aqueous solution of a compound having a polyalkylene glycol chain having no ionic groups introduced therein so that the compound having a polyalkylene glycol chain having no ionic groups is adsorbed with the membrane. The rejection to ionic solutes can be increased by treating the nanofiltration membrane or the reverse osmosis membrane with an aqueous solution of a compound having a polyalkylene glycol chain having ionic groups introduced therein so that the compound having a polyalkylene glycol chain having ionic groups is adsorbed with the membrane. A greater effect of increasing the rejection to ionic solutes is exhibited in the second process although the effect of increasing the rejection to ionic solutes can be exhibited also by the first process. A greater effect of increasing the rejection to nonionic solutes is exhibited in the first process although the effect of increasing the rejection to nonionic solutes can be exhibited also by the second process. Therefore, it is preferable that one of these processes is selected in accordance with the species to be separated and the object of separation. The present invention is an invention for increasing the rejection of a nanofiltration membrane or the reverse

osmosis membrane. When the membrane used as the base material exhibits a great rejection, it is possible that a still greater rejection is provided in accordance with the rejection of the membrane.

When the agent for increasing the rejection of a nanofiltration membrane or the reverse osmosis membrane of the present invention is used, the rejection of the reverse osmosis membrane is increased while the flux through the reverse osmosis membrane is maintained at a great value due to the use of a compound having a polyalkylene glycol chain having a weight-average molecular weight of 2,000 to 6,000, and substances which are hardly removed with a conventional reverse osmosis membrane such as nonionic organic substances, boron and silica can be effectively removed.

In the present invention, it is preferable that the polyalkylene glycol chain is a polyethylene glycol chain. The compound having a polyethylene glycol chain can be easily handled as the agent for increasing the rejection due to the excellent solubility into water, and the decrease in the property with time after being treated is small due to the great affinity with the surface of the composite membrane.

The agent for increasing the rejection of the nanofiltration membrane or the reverse osmosis membrane may comprise a tracer for confirming the rejection comprising an inorganic electrolyte or an organic compound soluble in water. When water containing the tracer in combination with the compound having a polyalkylene glycol chain is passed through the nanofiltration membrane or the reverse osmosis membrane, the rejection of the nanofiltration membrane or the reverse osmosis membrane can be confirmed with passage of the time, and it can be decided whether the treatment of passing the solution of the agent is continued or discontinued. It is preferable that the time of the treatment of passing the solution of the agent is 1 to 50 hours and more preferably 2 to 24 hours. When the concentration of the tracer in the permeated water has reached the prescribed value, it is decided that the rejection of the nanofiltration membrane or the reverse osmosis membrane has reached the prescribed value, and the treatment for increasing the rejection can be completed. In accordance with this process, the time of contact between the aqueous solution of the agent for increasing the rejection and the nanofiltration membrane or the reverse osmosis membrane can be controlled at the necessary sufficient minimum period of time, and the ordinary operation using the nanofiltration membrane or the reverse osmosis membrane can be immediately resumed. When the treatment for increasing the rejection is conducted a plurality of times using a plurality of agents for increasing the rejection, the plurality of treatments can be efficiently conducted without losing the suitable time for the switching. Examples of the inorganic electrolyte which can be used as the tracer include sodium chloride, sodium nitrate and boric acid which is a weak electrolyte, and sodium chloride is preferable from the standpoint of the easiness of handling. Examples of the organic compound soluble in water which can be used as the tracer include isopropyl alcohol, glucose and urea, and isopropyl alcohol is preferable from the standpoint of the easiness of handling. As the concentration of the tracer, it is preferable that the concentration is 10 to 1,000 mg/liter and more preferably 100 to 500 mg/liter when the inorganic strong electrolyte such as sodium chloride is used, and 1 to 5,000 mg/liter and more preferably 5 to 1,000 mg/liter when an weak inorganic electrolyte such as boric acid or an organic compound soluble in water such as isopropyl alcohol is used.

In the process for increasing the rejection of the nanofiltration membrane or the reverse osmosis membrane of the present invention, the concentration of the compound having a polyalkylene glycol chain in the agent for increasing the rejection of the nanofiltration membrane or the reverse osmosis membrane of the present invention is adjusted preferably in the range of 0.01 to 10 mg/liter and more preferably in the range of 0.1 to 5 mg/liter by diluting with water, and the obtained aqueous solution is brought into contact with the nanofiltration membrane or the reverse osmosis membrane. It is preferable that the aqueous solution is passed under an operating pressure such that the liquid permeates through the membrane. It is preferable that the operating pressure is approximately the same as the pressure applied in the ordinary use. As the concentration of the compound having a polyalkylene glycol chain, a suitable concentration can be selected with consideration on the polarization of the concentration. When the operation of filtration is conducted by passing an aqueous solution having a small concentration, a thin adsorption layer can be formed efficiently in the flow route of water, and the decrease in the flux can be suppressed to the minimum. When the concentration of the compound having a polyalkylene glycol chain is smaller than 0.01 mg/liter, there is the possibility that the adsorption layer is incomplete, and the rejection is not sufficiently increased. When the concentration of the compound having a polyalkylene glycol chain exceeds 10 mg/liter, there is the possibility that the adsorption layer is excessively thick, and the flux is decreased markedly.

The process for increasing the rejection of a nanofiltration membrane or a reverse osmosis membrane of the present invention can be suitably applied to a nanofiltration membrane or a reverse osmosis membrane which is unused or a nanofiltration membrane or a reverse osmosis membrane which has the same rejection as that of an unused nanofiltration membrane or an unused reverse osmosis membrane, respectively. The rejection can be increased by treating the nanofiltration membrane or the reverse osmosis membrane which is unused or the nanofiltration membrane or the reverse osmosis membrane which has the same rejection as that of the unused nanofiltration membrane or the unused reverse osmosis membrane, respectively, with the agent for increasing the rejection. Moreover, the decrease in the flux with time due to adsorption of other organic substances can be suppressed.

The process for increasing the rejection of a nanofiltration membrane or a reverse osmosis membrane of the

present invention can be applied to a nanofiltration membrane or a reverse osmosis membrane which has a decreased rejection in comparison with the rejection of the unused nanofiltration membrane or the unused reverse osmosis membrane, respectively, due to degradation. The rejection can be increased by treating the nanofiltration membrane or the reverse osmosis membrane which has a decreased rejection with the agent for increasing the rejection.

The nanofiltration membrane and the reverse osmosis membrane of the present invention is a nanofiltration membrane and a reverse osmosis membrane, respectively, obtained by increasing the rejection by bringing an aqueous solution of the compound having a polyalkylene glycol chain, which is preferably obtained by adjusting the concentration in the range of 0.01 to 10 mg/liter, into contact with the nanofiltration membrane and the reverse osmosis membrane, respectively. It is preferable that the rejection is increased by passing the above aqueous solution through the nanofiltration membrane and the reverse osmosis membrane, respectively. The nanofiltration membrane and the reverse osmosis membrane of the present invention may be used while the membranes remain attached to the module used for the treatment of increasing the rejection or may be used after the membranes are detached from the above module and attached to another module. In other words, when the nanofiltration membrane or the reverse osmosis membrane detached from module A is attached to module B, treated for increasing the rejection, detached from module B and, then, attached to module C for the use, module A, module B and module C may be the same with or entirely different from each other. When the treatment for increasing the rejection is conducted after the membrane is attached to a module, it is preferable that the aqueous solution of the agent for increasing the rejection is supplied to the upstream side of the module, and the treatment is conducted while the liquid permeated through the membrane is discharged.

The application of the nanofiltration membrane and the reverse osmosis membrane of the present invention is not particularly limited. Examples of the application include the application to a water supply system in which a rejection greater than that of the unused nanofiltration membrane or the unused reverse osmosis membrane is required and a system for waste water treatment in which the rejection of the nanofiltration membrane or the reverse osmosis membrane decreased to a value smaller than that of the unused nanofiltration membrane or the unused reverse osmosis membrane is recovered. Since the increase in the rejection of the nanofiltration membrane and the reverse osmosis membrane of the present invention is achieved by the adsorption of the compound having a polyalkylene chain having a weight-average molecular weight of 2,000 to 6,000, the quality of treated water required for a system for waste water treatment is satisfied, and the adsorption of contaminating substances contained in the water to be treated can be decreased. In some cases, a flux more excellent than that obtained by the ordinary nanofiltration membrane or reverse osmosis membrane can be maintained for long period of time.

The process for water treatment of the present invention is a process in which water to be treated is treated using a nanofiltration membrane or a reverse osmosis membrane obtained by increasing the rejection by bringing an aqueous solution of the compound having a polyalkylene glycol chain, which is preferably obtained by adjusting the concentration in the range of 0.01 to 10 mg/liter, into contact with the nanofiltration membrane or the reverse osmosis membrane, respectively. It is preferable that the rejection is increased by passing the above aqueous solution through the nanofiltration membrane or the reverse osmosis membrane.

The process for water treatment of the present invention is a process for water treatment in which at least two modules are used, and at least a portion of the concentrated water obtained by passing the water to be treated through the first membrane module is treated by the second membrane module. The first membrane module and/or the second membrane module can use the nanofiltration membrane or the reverse osmosis membrane exhibiting a rejection increased by bringing the nanofiltration membrane or the reverse osmosis membrane of the present invention into contact with an aqueous solution obtained by diluting the agent for increasing the rejection of the present invention with water so that the concentration is preferably 0.01 to 10 mg/liter.

The water to be treated to which the process for water treatment of the present invention is applied is not particularly limited. Examples of the water to be treated include water containing inorganic electrolytes, water containing low molecular weight nonionic substances, water containing boron and water containing silica. The process for water treatment of the present invention can be advantageously applied to water to be treated containing boron among the above waters. In particular, the process can be advantageously used for the desalination treatment of the water to be treated such as sea water containing 3 to 8 mgB/liter of boron. The concentration of boron can be decreased to 1 to 3 mg/liter, at most by the treatment using a conventional reverse osmosis membrane. In contrast, the concentration of boron can be further decreased by application of the process of the present invention to water to be treated containing boron in the concentration in the above range.

The apparatus for water treatment of the present invention is an apparatus for water treatment which uses a nanofiltration membrane or a reverse osmosis membrane obtained by increasing the rejection by bringing an aqueous solution of the compound having a polyalkylene glycol chain, which is preferably obtained by adjusting the concentration in the range of 0.01 to 10 mg/liter, into contact with the nanofiltration membrane or the reverse osmosis membrane. It is preferable that the above aqueous solution is passed through the nanofiltration membrane or the reverse osmosis membrane.

The apparatus for water treatment of the present invention is an apparatus for water treatment in which at least

two modules are used, and at least a portion of the concentrated water obtained by passing the water to be treated through the first membrane module is treated by the second membrane module. The first membrane module and/or the second membrane module can use the nanofiltration membrane or the reverse osmosis membrane exhibiting a rejection increased by bringing the nanofiltration membrane or the reverse osmosis membrane of the present invention into contact with an aqueous solution obtained by diluting the agent for increasing the rejection of the present invention with water so that the concentration is preferably 0.01 to 10 mg/liter.

The process for water treatment and the apparatus for water treatment of the present invention can be applied to a process for water treatment and an apparatus for water treatment which uses a nanofiltration membrane or a reverse osmosis membrane and, specifically, can be applied to desalination of sea water and salt water, recovery of waste water and production of pure water and ultrapure water. In the process for water treatment and the apparatus for water treatment of the present invention, it is preferable that a column packed with active charcoal, an apparatus for coagulation and precipitation, an apparatus for coagulation and floatation under pressure, an apparatus for filtration and an apparatus for decarbonization are disposed as apparatuses for pretreatment so that clogging and fouling of the nanofiltration membrane and the reverse osmosis membrane can be prevented. As the apparatus for filtration, an apparatus for filtration using sand, an apparatus for ultrafiltration, an apparatus for microfiltration and a small apparatus for filtration can be used. A prefilter may be additionally disposed as the apparatus for pretreatment. It is preferable that an apparatus for removing oxidizing substances (substances inducing degradation by oxidation) contained in the raw water is disposed where necessary since the nanofiltration membrane and the reverse osmosis membrane tend to be degraded by oxidation. As the apparatus for removing substances inducing degradation by oxidation, a column packed with active charcoal or an apparatus for injecting a reducing agent can be used. In particular, the column packed with active charcoal can be used also as the means for preventing fouling since the column packed with active charcoal can remove organic substances.

When ultrapure water is produced in accordance with the process for treating water and using the apparatus for treating water of the present invention, a means for removing carbonic acid, an apparatus for ion exchange, an apparatus for deionization by electrio-regenerating type deionizing apparatus, an apparatus for UV oxidation, an apparatus containing mixed resins and an apparatus for ultrafiltration are disposed in the downstream steps.

## EXAMPLES

The present invention will be described more specifically with reference to examples in the following. However, the present invention is not limited to the examples.

The rejection in Examples and Comparative Examples was calculated in accordance with the following equation:

$$\text{rejection} = 1 - (\text{concentration of solutes in permeated water} \times 2) / (\text{concentration of solutes in supplied water} + \text{concentration of solutes in concentrated water})$$

### Example 1

The relations of the weight-average molecular weight of polyethylene glycol with the flux and the rejection were examined using an aqueous solution of urea.

A reverse osmosis membrane [manufactured by NITTO DENKO Co., Ltd,; ES20] was disposed on a flat membrane cell having an area of the membrane of 8 $cm^2$. An aqueous solution of urea having a concentration of 50 mg/liter was passed through the cell under a pressure of 0.75 MPa. The flux was 1.024 $m^3/(m^2 \cdot d)$, and the rejection was 0.154.

An aqueous solution containing polyethylene glycol having a weight-average molecular weight of 400 in a concentration of 1 mg/liter was passed through the flat membrane cell in which the reverse osmosis membrane was disposed as described above under a pressure of 0.75 MPa for 20 hours and, then, an aqueous solution of urea having a concentration of 50 mg/liter was passed through the cell under a pressure of 0.75 MPa. The flux was 1.087 $m^3/(m^2 \cdot d)$, and the rejection was 0.148.

The same examinations were conducted using polyethylene glycols having weight-average molecular weights of 1,080, 1,470, 2,000, 4,000, 6,000 and 7,100. The flux was 0.853 $m^3/(m^2 \cdot d)$, and the rejection was 0.254 when the weight-average molecular weight was 2,000. The flux was 0.698 $M^3/(m^2 \cdot d)$, and the rejection was 0.322 when the weight-average molecular weight was 4,000. The flux was 0.559 $m^3/(m^2 \cdot d)$, and the rejection was 0.362 when the weight-average molecular weight was 6,000.

Comparative Example 1

Examinations were conducted in accordance with the same procedures as those conducted in Example 1 except that an aqueous solution containing polyvinyl alcohol having a weight-average molecular weight of 22,000 in a concentration of 1 mg/liter or an aqueous solution containing polyethyleneimine having a weight-average molecular weight of 75,000 in a concentration of 1 mg/liter was used in place of the aqueous solution of polyethylene glycol.

The flux was 0.736 $m^3/(m^2 \cdot d)$, and the rejection was 0.231 when polyvinyl alcohol was used. The flux was 0.750 $m^3/(m^2 \cdot d)$, and the rejection was 0.218 when polyethyleneimine was used.

The results of Example 1 and Comparative Example 1 are shown in Table 1.

Table 1

| | Polymer | Weight-average molecular weight | Flux ($m^3/m^2 \cdot d$) | Rejection |
|---|---|---|---|---|
| Example 1 | none | - | 1.024 | 0.154 |
| | PEG | 400 | 1.087 | 0.148 |
| | | 1080 | 1.157 | 0.157 |
| | | 1470 | 0.911 | 0.197 |
| | | 2000 | 0.853 | 0.254 |
| | | 4000 | 0.698 | 0.322 |
| | | 6000 | 0.559 | 0.362 |
| | | 7100 | 0.421 | 0.392 |
| Comparative Example 1 | PVA | 22000 | 0.736 | 0.231 |
| | PEI | 75000 | 0.750 | 0.218 |

Notes
PEG: polyethylene glycol
PVA: polyvinyl alcohol
PEI: polyethyleneimine

As shown in Table 1, the effect of increasing the rejection was small when the weight-average molecular weight of polyethylene glycol was 1,470 or smaller. The decrease in the flux was great, and the effect of increasing the rejection was insufficient for overcoming the decrease in the flux when the weight-average molecular weight of polyethylene glycol was 7,100 or greater. The rejection to urea could be increased without a great decrease in the flux when the weight-average molecular weight of polyethylene glycol was 2,000 to 6,000 and preferably about 4,000.

Although polyvinyl alcohol having a weight-average molecular weight of 22,000 and polyethyleneimine having a weight-average molecular weight of 75,000 had weight-average molecular weights greater than that of polyethylene glycol used in Example 1, it is shown that the effect of increasing the rejection without decreasing the flux was small.

Example 2

In the treatment with polyethylene glycol or sulfonated polyethylene glycol, the flux and the rejection were examined using an aqueous solution of isopropyl alcohol.

A reverse osmosis membrane [manufactured by NITTO DENKO Co., Ltd,; ES20] was disposed on a flat membrane cell having an area of the membrane of 8 $cm^2$. An aqueous solution of isopropyl alcohol having a concentration of 300 mg/liter was passed through the cell under a pressure of 0.75 MPa. The flux was 1.069 $m^3/(m^2 \cdot d)$, and the rejection was 0.778.

An aqueous solution containing polyethylene glycol having a weight-average molecular weight of 4,000 in a concentration of 1 mg/liter was passed through the flat membrane cell in which the reverse osmosis membrane was disposed as described above under a pressure of 0.75 MPa for 20 hours and, then, an aqueous solution of isopropyl alcohol having a concentration of 300 mg/liter was passed through the cell under a pressure of 0.75 MPa. The flux was 0.624 $m^3/(m^2 \cdot d)$, and the rejection was 0.879.

The same examinations were conducted using a sulfonated polyethylene glycol in place of polyethylene glycol having a weight-average molecular weight of 4,000. The sulfonated polyethylene glycol was synthesized by heating an

aqueous solution containing 1 mmole/liter of polyethylene glycol having a weight-average molecular weight of 4,000, 100 mmole/liter of 2,3-epoxy-1-propanol and 100 mmole/liter of sodium sulfite under the refluxing condition of 80°C for 20 minutes. The flux was 0.729 $m^3/(m^2 \cdot d)$, and the rejection was 0.804.

Example 3

The same procedures as those conducted in Example 2 were conducted except that an aqueous solution of sodium chloride having a concentration of 500 mg/liter was used in place of the aqueous solution of isopropyl alcohol having a concentration of 300 mg/liter.

The flux was 0.955 $m^3/(m^2 \cdot d)$, and the rejection was 0.971 when no aqueous solution of a polymer was passed through the reverse osmosis membrane. The flux was 0.589 $m^3/(m^2.d)$, and the rejection was 0.978 when the aqueous solution of polyethylene glycol was passed through the reverse osmosis membrane. The flux was 0.619 $m^3/(m^2 \cdot d)$, and the rejection was 0.986 when the aqueous solution of the sulfonated polyethylene glycol was passed through the reverse osmosis membrane.

The results of Examples 2 and 3 are shown in Table 2.

Table 2

| | Polymer | Weight-average molecular weight | Water for treatment | Flux ($m^3/m^2 \cdot d$) | Rejection |
|---|---|---|---|---|---|
| Example 2 | none | - | aqueous solution of IPA, 300 mg/liter | 1.069 | 0.778 |
| | PEG | 4000 | | 0.624 | 0.879 |
| | sulfonated PEG | 4000 | | 0.729 | 0.804 |
| Example 3 | none | - | aqueous solution of NaCl, 500 mg/liter | 0.955 | 0.971 |
| | PEG | 4000 | | 0.589 | 0.978 |
| | sulfonated PEG | 4000 | | 0.619 | 0.986 |

Notes
PEG: polyethylene glycol
IPA: isopropyl alcohol

As shown in Table 2, when polyethylene glycol was used, the effect of increasing the rejection to isopropyl alcohol was greater than the corresponding effect to sodium chloride, and the flux decreased to about 60%. When the sulfonated polyethylene glycol was used, the decrease in the flux was small although the effect of increasing the rejection to isopropyl alcohol is smaller than that obtained by using polyethylene glycol. The effect of increasing the rejection to sodium chloride was greater when the sulfonated polyethylene glycol was used.

Example 4

Durability of the effect of increasing the rejection to boric acid in an aqueous solution was examined using a reverse osmosis membrane for desalination of sea water.

A reverse osmosis membrane for desalination of sea water [manufactured by TORAY Co., Ltd,; TM80] was disposed on a flat membrane cell having an area of the membrane of 8 $cm^2$. An aqueous solution of boric acid having a concentration of about 7 mgB/liter was passed through the cell under a pressure of 3.0 MPa. The flux was 1.11 $m^3/(m^2 \cdot d)$. The concentration of boron was 6.83 mgB/liter in the supplied water, 12.89 mgB/liter in the concentrated water and 2.77 in the permeated water.

An aqueous solution containing sulfonated polyethylene glycol having a weight-average molecular weight of 4,000 in a concentration of 0.1 mg/liter was passed through the flat membrane cell in which the reverse osmosis membrane was disposed as described above under a pressure of 3.0 MPa for 20 hours. Then, an aqueous solution of boric acid in a concentration of about 7 mg/liter was passed through the cell for 410 hours, and the flux and the concentration of boron in the supplied water, in the concentrated water and in the permeated water were measured.

In the period of 1 to 5 hours after the passage of the aqueous solution of sulfonated polyethylene glycol was completed, the flux was 0.83 $m^3/(m^2 \cdot d)$, and the concentration of boron was 6.77 mgB/liter in the supplied water, 10.92 mgB/liter in the concentrated water and 1.38 in the permeated water.

In the period of 400 to 410 hours after the passage of the aqueous solution of sulfonated polyethylene glycol was completed, the flux was 0.79 $m^3/(m^2 \cdot d)$, and the concentration of boron was 7.04 mgB/liter in the supplied water,

10.62 mgB/liter in the concentrated water and 1.07 in the permeated water.

The fluxes and the concentrations of boron in the waters described above during the period of the examination are shown in Table 3.

Table 3

| Time passed (h) | Flux ($m^3/m^2 \cdot d$) | Concentration of boron (mgB/liter) | | |
|---|---|---|---|---|
| | | supplied liquid | concentrated liquid | permeated liquid |
| Before passing sulfonated PEG | 1.11 | 6.83 | 12.89 | 2.77 |
| 1~5 | 0.83 | 6.77 | 10.92 | 1.38 |
| 160~170 | 0.82 | 6.89 | 10.69 | 1.35 |
| 230~240 | 0.81 | 6.93 | 10.86 | 1.24 |
| 280~290 | 0.81 | 6.98 | 10.69 | 1.09 |
| 330~340 | 0.81 | 7.02 | 10.67 | 1.08 |
| 400~410 | 0.79 | 7.04 | 10.62 | 1.07 |

Note
PEG: polyethylene glycol

The concentration of boron in the permeated water was 2.77 mgB/liter before the aqueous solution of sulfonated polyethylene glycol was passed through the reverse osmosis membrane. After the aqueous solution of sulfonated polyethylene glycol was passed through the reverse osmosis membrane, the concentration of boron in the permeated water decreased to 1.07 to 1.38 mgB/liter. The flux was 0.83 ($m^3/m^2 \cdot d$) immediately after the aqueous solution of sulfonated polyethylene glycol was passed through the reverse osmosis membrane and 0.79 ($m^3/m^2 \cdot d$) after 400 hours. It is shown that the performance of the reverse osmosis membrane was maintained for more than 400 hours.

Example 5

A spiral element of a reverse osmosis membrane was treated with an aqueous solution of polyethylene glycol, and the flux and the rejection were examined using an aqueous solution of sodium chloride and an aqueous solution of boric acid.

Pure water was passed through a 4 inch ultralow pressure spiral element of a reverse osmosis membrane [manufactured by NITTO DENKO Co., Ltd.; ES20-D4] under a pressure of 0.75 MPa. The flux was 1.065 $m^3/(m^2 \cdot d)$. An aqueous solution of sodium chloride having a concentration of 400 mg/liter was passed through the spiral element of a reverse osmosis membrane under a pressure of 0.75 MPa. The flux was 0.958 $m^3/(m^2 \cdot d)$, and the rejection was 0.9952. Then, an aqueous solution of boric acid having a concentration of 7 mgB/liter was passed through the spiral element of a reverse osmosis membrane under a pressure of 0.75 MPa. The flux was 1.08 $m^3/(m^2 \cdot d)$, and the rejection was 0.495.

An aqueous solution containing 4 mg/liter of polyethylene glycol having a weight-average molecular weight of 4,000 and 400 mg/liter of sodium chloride was passed through the spiral element of a reverse osmosis membrane described above under a pressure of 0.75 MPa, and the treatment was completed after 1 hour when the electric conductivity of the permeated liquid became one half of the original value.

Pure water was passed through a spiral element of a reverse osmosis membrane which had been treated with polyethylene glycol under a pressure of 0.75 MPa. The flux was 0.808 $m^3/(m^2.d)$. An aqueous solution of sodium chloride having a concentration of 400 mg/liter was passed through the spiral element of a reverse osmosis membrane under a pressure of 0.75 MPa. The flux was 0.770 $m^3/(m^2 \cdot_d)$, and the rejection was 0.9978. Then, an aqueous solution of boric acid having a concentration of 7 mgB/liter was passed through the element under a pressure of 0.75 MPa. The flux was 0.82 $m^3/(m^2 \cdot d)$, and the rejection was 0.583.

The flux of pure water, the flux and the rejection with respect to the aqueous solution of sodium chloride, and the flux and the rejection with respect to the aqueous solution of boric acid using the spiral element of a reverse osmosis membrane before and after the treatment with polyethylene glycol are shown in Table 4.

Table 4

| | Pure water | Aqueous. solution of NaCl, 400 mg/liter | | Aqueous solution of boric acid, 7 mgB/liter | |
|---|---|---|---|---|---|
| | flux ($m^3/m^2 \cdot d$) | flux ($m^3/m^2 \cdot d$) | rejection | flux ($m^3/m^2 \cdot d$) | rejection |
| Before passing PEG | 1.065 | 0.958 | 0.9952 | 1.08 | 0.495 |
| After passing PEG | 0.808 | 0.770 | 0.9978 | 0.82 | 0.583 |
| Note<br>PEG: polyethylene glycol | | | | | |

As shown in Table 4, the concentration of sodium chloride in the permeated solution decreased to one half or smaller of the original value, and the concentration of boron decreased by about 20% due to the treatment of the spiral element of a reverse osmosis membrane with polyethylene glycol. In the case of the spiral membrane element, the decrease in the flux was small, and great values of the rejection were obtained even when the concentration of the aqueous solution of polyethylene glycol passed through the element was great since the polarization of the concentration was smaller than that in the flat membrane.

Example 6

After a nanofiltration membrane was treated by passing an aqueous solution of a sulfonated polyethylene glycol through the membrane, an aqueous solution of sodium chloride, an aqueous solution of sodium nitrate or an aqueous solution of isopropyl alcohol was passed through the membrane, and the flux and the rejection were measured.

A nanofiltration membrane [manufactured by NITTO DENKO Co., Ltd,; LES90] was disposed on a flat membrane cell having an area of the membrane of 8 $cm^2$. An aqueous solution of sodium chloride having a concentration of 500 mg/liter was passed through the cell under a pressure of 0.5 MPa. The flux was 1.108 $m^3/(m^2 \cdot d)$, and the rejection was 0.897. Then, an aqueous solution of sodium nitrate having a concentration of 500 mg/liter was passed through the cell under a pressure of 0.5 MPa. The flux was 1.226 $m^3/(m^2 \cdot d)$, and the rejection was 0.796. An aqueous solution of isopropyl alcohol having a concentration of 300 mg/liter was passed through the cell under a pressure of 0.5 MPa. The flux was 1.322 $m^3/(m^2 \cdot d)$, and the rejection was 0.439.

An aqueous solution containing the sulfonated polyethylene glycol having a weight-average molecular weight of 4,000 in a concentration of 1 mg/liter was passed through the flat membrane cell in which the nanofiltration membrane was disposed as described above under a pressure of 0.5 MPa for 20 hours and, then, an aqueous solution of sodium chloride having a concentration of 500 mg/liter was passed under a pressure of 0.5 MPa. The flux was 0.602 $m^3/(m^2 \cdot d)$, and the rejection was 0.955. An aqueous solution of sodium nitrate having a concentration of 500 mg/liter was passed under a pressure of 0.5 MPa. The flux was 0.656 $m^3/(m^2 \cdot d)$, and the rejection was 0.915. Then, an aqueous solution of isopropyl alcohol having a concentration of 300 mg/liter was passed under a pressure of 0.5 MPa. The flux was 0.727 $m^3/(m^2 \cdot d)$, and the rejection was 0.712.

The same procedures as those conducted above were conducted except that the concentration of the sulfonated polyethylene glycol having a weight-average molecular weight of 4,000 in the aqueous solution passed through the flat membrane in which the nanofiltration membrane was disposed as described above was 0.5 mg/liter or 0.1 mg/liter.

The fluxes and the rejections before and after the treatment of passing the aqueous solution of the sulfonated polyethylene glycol are shown in Table 5.

Table 5

| Concentration of sulfonated | | Aqueous solution of NaCl, 500 mg/liter | | Aqueous. solution of $NaNO_3$, 500 mg/liter | | Aqueous solution of IPA, 300 mg/liter | |
|---|---|---|---|---|---|---|---|
| PEG (mg.liter) | | flux ($m^3/m^2 \cdot d$) | rejection | flux ($m^3/m^2 \cdot d$) | rejection | flux ($m^3/m^2 \cdot d$) | rejection |
| 1 | before treatment | 1.108 | 0.897 | 1.226 | 0.796 | 1.322 | 0.439 |
| | after treatment | 0.602 | 0.955 | 0.656 | 0.915 | 0.727 | 0.712 |

(continued)

| Concentration of sulfonated PEG (mg.liter) | | Aqueous solution of NaCl, 500 mg/liter | | Aqueous. solution of $NaNO_3$, 500 mg/liter | | Aqueous solution of IPA, 300 mg/liter | |
|---|---|---|---|---|---|---|---|
| | | flux ($m^3/m^2 \cdot d$) | rejection | flux ($m^3/m^2 \cdot d$) | rejection | flux ($m^3/m^2 \cdot d$) | rejection |
| 0.5 | before treatment | 1.147 | 0.891 | 1.239 | 0.760 | 1.370 | 0.415 |
| | after treatment | 0.650 | 0.938 | 0.719 | 0.870 | 0.798 | 0.651 |
| 0.1 | before treatment | 1.185 | 0.893 | 1.366 | 0.775 | 1.484 | 0.443 |
| | after treatment | 0.904 | 0.924 | 1.019 | 0.829 | 1.141 | 0.580 |

Notes
PEG: polyethylene glycol
IPA: isopropyl alcohol

As shown in Table 5, the rejection to the aqueous solution of sodium chloride, the aqueous solution of sodium nitrate and the aqueous solution of isopropyl alcohol could be increased without a great decrease in the flux by passing the aqueous solution of the sulfonated polyethylene having a weight-average molecular weight of 4,000 in a concentration of 1 mg/liter, 0.5 mg/liter or 0.1 mg/liter through the nanofiltration membrane.

Example 7

Recovery of a spiral element of a reverse osmosis membrane having a degraded property was conducted.
A 4 inch low pressure spiral element of a reverse osmosis membrane [manufactured by NITTO DENKO Co., Ltd.; NTR759HR] having a property for rejecting solutes greatly degraded due to contact with an oxidizing agent exhibited a flux of pure water of 1.552 $m^3/(m^2 \cdot d)$ and a flux of an aqueous solution of sodium chloride having a concentration of 500 mg/liter of 1.241 $m^3/(m^2 \cdot d)$ and a rejection of 0.878 under an operating pressure of 1.2 MPa.
Through the spiral element of a reverse osmosis membrane described above, an aqueous solution of the sulfonated polyethylene glycol having a weight-average molecular weight of 4,000 was passed under an operating pressure of 1.2 MPa for 20 hours. The spiral element of a reverse osmosis membrane recovered by passing the solution exhibited a flux of 1.242 $m^3/(m^2 \cdot d)$ with pure water and a flux of 0.992 $m^3/(m^2 \cdot d)$ and a rejection of 0.968 with an aqueous solution of sodium chloride having a concentration of 500 mg/liter under an operating pressure of 1.2 MPa.

Comparative Example 2

Recovery of a spiral element of a reverse osmosis membrane having a degraded property was attempted.
Using a 4 inch low pressure spiral element of a reverse osmosis membrane having a property for rejecting solutes greatly degraded due to contact with an oxidizing agent, which was the same type as that described in Example 7, the same procedures as those conducted in Example 7 were conducted except that polyvinyl alcohol having a weight-average molecular weight of 22,000 or polyethyleneimine having a weight-average molecular weight of 75,000 was used in place of the sulfonated polyethylene glycol having a weight-average molecular weight of 4,000.
When polyvinyl alcohol was used, the flux was 1.454 $m^3/(m^2 \cdot d)$ with pure water, and the flux was 1.210 $m^3/(m^2 \cdot d)$ and the rejection was 0.898 with an aqueous solution of sodium chloride having a concentration of 500 mg/liter before the recovery. After the recovery, the change in the properties was such that the flux was 1.045 $m^3/(m^2 \cdot d)$ with pure water, and the flux was 0.891 $m^3/(m^2 \cdot d)$ and the rejection was 0.918 with an aqueous solution of sodium chloride having a concentration of 500 mg/liter.
When polyethyleneimine was used, the flux was 1.568 $m^3/(m^2 \cdot d)$ with pure water, and the flux was 1.253 $m^3/(m^2 \cdot d)$ and the rejection was 0.878 with an aqueous solution of sodium chloride having a concentration of 500 mg/liter before the recovery. After the recovery, the change in the properties was such that the flux was 1.197 $m^3/(m^2 \cdot d)$ with pure water, and the flux was 0.970 $m^3/(m^2 \cdot d)$ and the rejection was 0.922 with an aqueous solution of sodium chloride having a concentration of 500 mg/liter.
The results of Example 7 and Comparative Example 2 are shown in Table 6.

Table 6

| | Polymer | | Pure water | Aqueous. solution of NaCl, 500 mg/liter | |
|---|---|---|---|---|---|
| | | | flux ($m^3/m^2 \cdot d$) | flux ($m^3/m^2 \cdot d$) | rejection |
| Example 7 | sulfonated PEG | before recovery | 1.552 | 1.241 | 0.878 |
| | | after recovery | 1.242 | 0.992 | 0.968 |
| Comparative Example 2 | PVA | before recovery | 1.454 | 1.210 | 0.898 |
| | | after recovery | 1.045 | 0.891 | 0.918 |
| | PEI | before recovery | 1.568 | 1.253 | 0.878 |
| | | after recovery | 1.197 | 0.970 | 0.922 |

Notes
PEG: polyethylene glycol
PVA: polyvinyl alcohol
PEI: polyethyleneimine

As shown in Table 6, in Example 7 in which the aqueous solution of the sulfonated polyethylene glycol was passed through the spiral element of a reverse osmosis membrane having a property for rejecting solutes greatly degraded due to contact with an oxidizing agent, the decrease in the flux was small and the rejection was increased with respect to the aqueous solution of sodium chloride, and the property was recovered to a level allowing the use for preparation of water of the medium grade.

In contrast, in Comparative Example 2 in which the aqueous solution of polyvinyl alcohol or the aqueous solution of polyethyleneimine was passed through the reverse osmosis membrane having a degraded property, the degree of improvement in the rejection was smaller while the decrease in the flux was greater in comparison with those in Example 7.

Example 8

To confirm the effect of polypropylene glycol, the same examination as that conducted in Example 4 was conducted except that polypropylene glycol having a weight-average molecular weight of 4,000 was used. The result is shown in Table 7.

Table 7

| Time passed | Flux | Concentration of boron (mgB/liter) | | |
|---|---|---|---|---|
| (h) | ($m^3/m^2 \cdot d$) | supplied water | concentrated water | permeated water |
| Before passing PPG | 1.098 | 6.86 | 12.64 | 2.33 |
| 21~23 | 0.841 | 6.79 | 11.22 | 1.63 |
| 110~130 | 0.880 | 7.05 | 11.69 | 1.61 |

Note
PPG: polypropylene glycol

It is shown that polypropylene glycol exhibited the effect of increasing the rejection to boron and the effect could be maintained. When the effects were compared with those of polyethylene glycol, the decrease in the flux was smaller and the effect of increasing the rejection is smaller.

Comparative Example 3

The effect of the use of the reverse osmosis membrane treated with the agent for increasing the rejection of the present invention was confirmed on the process for water treatment and the apparatus for water treatment, in which two membrane modules were used and concentrated water obtained by passing water to be treated through the first membrane module was treated by the second membrane module.

The treatment of city water was conducted using two modules each having a 4 inch spiral element of a reverse

osmosis membrane manufactured by NITTO DENKO Co., Ltd. contained in a housing as the first membrane module and the second membrane module. The entire amount of the concentrated water from the first membrane module was supplied to the second membrane module. The water permeated through the second module was returned to the first module as the supply water, and the concentrated water from the second module was discharged to the outside of the system. The conditions of the operation were as follows.

Amount of supply of city water: 52 $m^3$/h
Amount of water permeated through the first membrane module: 49.5 $m^3$/h
Amount of concentrated water from the first membrane module: 5.5 $m^3$/h
Amount of water permeated through the second membrane module: 3 $m^3$/h
Amount of concentrated water from the second membrane module: 2.5 $m^3$/h
Recovery by the entire apparatus: 95.2%

The quality of the permeated water and the concentrated water from each module are shown in Table 8.

Example 9

The treatment of city water was conducted in accordance with the same procedures as those conducted in Comparative Example 3 except that a 4 inch spiral element of a reverse osmosis membrane "NTR-759HR" manufactured by NITTO DENKO Co., Ltd. as the second membrane module was treated in advance by passing an aqueous solution of polyethylene glycol having a weight-average molecular weight of 4,000 in a concentration of 1 mg/liter under a pressure of 0.75 MPa for 20 hours while the element was placed in the housing. The result is shown in Table 8.

Example 10

The treatment of city water was conducted in accordance with the same procedures as those conducted in Comparative Example 3 except that 4 inch spiral elements of a reverse osmosis membrane "NTR-759HR" manufactured by NITTO DENKO Co., Ltd. as the first membrane module and the second membrane module were treated in advance by passing an aqueous solution of polyethylene glycol having a weight-average molecular weight of 4,000 in a concentration of 1 mg/liter under a pressure of 0.75 MPa for 20 hours while the elements were placed in the housing. The result is shown in Table 8.

Table 8

| | Presence or absence of agent for increasing rejection | | Electric conductivity (mS/m) | | | |
|---|---|---|---|---|---|---|
| | | | first membrane module | | second membrane module | |
| | first membrane module | second membrane module | permeated water | concentrated water | permeated water | concentrated water |
| Comparative Example 3 | none | none | 22.2 | 1480 | 316 | 2600 |
| Example 9 | none | PEG | 19.7 | 1413 | 141 | 2940 |
| Example 10 | PEG | PEG | 16.0 | 1440 | 144 | 3000 |

Note
PEG: polyethylene glycol

As clearly shown in Table 8, highly desalted permeated water could be obtained in accordance with the process for water treatment of the present invention and by using the apparatus for water treatment of the present invention even when the reverse osmosis treatment was conducted with a great recovery.

INDUSTRIAL APPLICABILITY

In accordance with the present invention, the rejection and, in particular, the rejection to nonionic solutes which is hardly increased in accordance with a conventional process, of a nanofiltration membrane or a reverse osmosis membrane can be increased while the flux is kept at a great value. The agent for increasing the rejection of the present invention and the process for increasing the rejection of the present invention can be applied not only to a nanofiltration

membrane and a reverse osmosis membrane which are unused but also to a nanofiltration membrane and a reverse osmosis membrane which are degraded by the use, and the property decreased by the degradation can be completely recovered easily and safely at the place of the use of the membrane. Highly purified water can be obtained by the apparatus for water treatment of the present invention with a great recovery.

## Claims

1. A process for increasing rejection of a membrane which comprises the following steps:

   supplying an aqueous solution of a compound having a polyakylene glycol chain obtained by diluting a compound having a polyalkylene glycol chain with water to an upstream side of a membrane module to which the membrane is attached, and
   bringing the membrane into contact with the aqueous solution of the compound having a polyalkylene glycol chain,

   **characterized in that**

   i) the membrane is a nanofiltration membrane or a reverse osmosis membrane comprising a polyamide-based raw material,
   ii) the polyalkylene glycol chain has a weight-average molecular weight of 2,000 to 6,000.

2. A process for increasing rejection of a membrane according to claim 1, wherein the polyalkylene glycol chain has an ionic group introduced therein.

3. A process for increasing rejection of a membrane according to any one of claims 1 and 2, wherein the polyalkylene glycol chain is a polyethylene glycol chain.

4. A process for increasing rejection of a membrane according to any one of claims 1 to 3, wherein the aqueous solution comprises a tracer for confirming rejection comprising an inorganic electrolyte or an organic compound soluble in water.

5. A nanofiltration membrane or a reverse osmosis membrane exhibiting a rejection increased by the processes described any one of claims 1 to 4.

6. A nanofiltration membrane or a reverse osmosis membrane according to claim 5, wherein the nanofiltration membrane or a reverse osmosis membrane is applied to a treatment of water containing low molecular weight nonionic substances, water containing boron and water containing silica.

7. A nanofiltration membrane or a reverse osmosis membrane according to claim 6, wherein the water to be treated comprises boron in an amount of 3 to 8 mgB/liter.

## Patentansprüche

1. Ein Verfahren zum Erhöhen des Abstoßens einer Membran mit den folgenden Schritten:

   Zuführen einer wässrigen Lösung einer Verbindung mit einer Polyalkylenglycolkette, die gewonnen worden ist durch Lösen einer Verbindung mit einer Polyalkylenglycolkette mit Wasser, zu der stromaufwärts gelegenen Seite eines Membranmoduls, an dem die Membran angebracht ist, und
   Inkontaktbringen der Membran mit der wässrigen Lösung der Verbindung mit einer Polyalkylenglycolkette,

   **dadurch gekennzeichnet, dass**

   i) die Membran eine Nanofiltrationmembran oder eine Umkehrosmosemembran mit einem auf einem Polyamid basierenden Rohmaterial ist, und
   ii) die Polyalkylenglycolkette ein durchschnittliches Molekulargewicht von 2,000 bis 6,000 hat.

**2.** Ein Verfahren zum Erhöhen der Abstoßung einer Membran nach Anspruch 1, wobei die Polyalkylenglycolkette eine in diese eingebrachte ionische Gruppe hat.

**3.** Ein Verfahren zum Verbessern der Abstoßung einer Membran nach einem der Ansprüche 1 und 2, wobei die Polyalkylenglycolkette eine Polyethylenglycolkette ist.

**4.** Ein Verfahren zum Erhöhen der Abstoßung einer Membran nach einem der Ansprüche 1 bis 3, wobei die wässrige Lösung einen Tracer zum Bestätigen der Abstoßung mit einem anorganischen Elektrolyt oder einer organischen Verbindung, die in Wasser löslich ist, hat.

**5.** Eine Nanofiltrationsmembran oder eine Umkehrosmosemembran, die eine Abstoßungsverbesserung durch das Verfahren, das in einem der Ansprüche 1 bis 4 beschrieben worden ist, zeigt.

**6.** Eine Nanofiltrationsmembran oder eine Umkehrosmosemembran nach Anspruch 5, wobei die Nanofiltrationsmembran oder die Umkehrosmosemembran bei der Behandlung von Wasser, das nicht ionische Substanzen mit einem geringen Molekulargewicht beinhaltet, Wasser, das Bor beinhaltet und Wasser, das Siliziumdioxid beinhaltet, angewendet wird.

**7.** Eine Nanofiltragionsmembran oder eine Umkehrosmosemembran nach Anspruch 6, wobei das zu behandelnde Wasser Bor in einer Menge von 3 bis 8 mgB/Liter aufweist.

**Revendications**

**1.** Procédé d'augmentation du rejet d'une membrane qui comprend les étapes suivantes :

fourniture d'une solution aqueuse d'un composé possédant une chaîne de polyalkylène glycol obtenue en diluant un composé possédant une chaîne de polyalkylène glycol avec de l'eau à un côté en amont d'un module à membrane auquel la membrane est attachée, et
mise en contact de la membrane avec la solution aqueuse du composé possédant une chaîne de polyalkylène glycol,

**caractérisé en ce que**

i) La membrane est une membrane de nanofiltration ou une membrane d'osmose inverse contenant un matériau brut basé sur le polyamide,
ii) La chaîne de polyalkylène glycol a une masse moléculaire moyenne pondérée de 2.000 à 6.000.

**2.** Procédé d'augmentation du rejet d'une membrane selon la revendication 1, dans lequel la chaîne de polyalkylène glycol possède un groupe ionique introduit en son sein.

**3.** Procédé d'augmentation du rejet d'une membrane selon l'une quelconque des revendications 1 et 2, dans lequel la chaîne de polyalkylène glycol est une chaîne de polyéthylène glycol.

**4.** Procédé d'augmentation du rejet d'une membrane selon l'une quelconque des revendications 1 à 3, dans laquelle la solution aqueuse comprend un traceur pour confirmer le rejet contenant un électrolyte inorganique ou un composé organique soluble dans l'eau.

**5.** Membrane de nanofiltration ou membrane d'osmose inverse faisant preuve d'un rejet augmenté par les procédés décrits dans l'une quelconque des revendications 1 à 4.

**6.** Membrane de nanofiltration ou membrane d'osmose inverse selon la revendication 5, dans laquelle la membrane de nanofiltration ou une membrane d'osmose inverse est appliquée à un traitement de l'eau contenant des substances nonioniques de faible poids moléculaire, de l'eau contenant du bore et de l'eau contenant du silice.

**7.** Membrane de nanofiltration ou membrane d'osmose inverse selon la revendication 6, dans laquelle l'eau à traiter contient du bore selon une quantité de 3 à 8 mgB/litre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP SHOWA53197828083 B
- JP SHOWA501975140378 B
- JP SHOWA551980114306 B
- JP SHOWA56198167504 B
- JP 2003088730 A
- US 2004140259 A
- WO 2005089913 A
- US 3710945 A